# EUROPÄISCHE PATENTSCHRIFT

(11) **EP 1 446 214 B1**
(45) Veröffentlichungstag und Bekanntmachung des Hinweises auf die Patenterteilung: **02.01.2008**
(21) Anmeldenummer: 02803078.1
(22) Anmeldetag: 08.11.2002
(51) Int. Cl.: B01D 45/16, B01D 50/00

(54) **VORRICHTUNG ZUR STAUB- UND SCHMUTZABSCHEIDUNG IN STRÖMENDEN MEDIEN**
DEVICE FOR SEPARATING DUST AND FILTH IN FLOWING MEDIA
DISPOSITIF POUR SEPARER LES POUSSIERES ET LES IMPURETES DANS DES MILIEUX EN ECOULEMENT

(30) Priorität: 13.11.2001 CH 208201
(43) Veröffentlichungstag der Anmeldung: 18.08.2004
(73) Patentinhaber: Alstom Technology Ltd, 5401 Baden (CH)
(72) Erfinder: ANDERSON, Gordon, CH-5400 Baden (CH); FRIED, Reinhard, CH-5415 Nussbaumen (CH); NAIK, Shailendra, CH-5412 Gebenstorf (CH); SCHLECHTRIEM, Stefan, CH-5522 Tägerig (CH); ZIERER, Thomas, CH-5408 Ennetbaden (CH)
(86) Internationale Anmeldenummer: PCT/IB2002/004716
(87) Internationale Veröffentlichungsnummer: WO 2003/041842

(56) Entgegenhaltungen:
- EP-A- 0 529 773
- DE-A- 2 329 248
- DE-C- 870 549
- GB-A- 1 208 789
- GB-A- 2 164 391
- US-A- 3 907 671

## Beschreibung

### Technisches Anwendungsgebiet

Die vorliegende Erfindung betrifft eine Vorrichtung zur Staub- und Schmutzabscheidung in strömenden Medien gemäss dem oberbegriff des Anspruchs 1. Derartige Abscheider finden beispielsweise, für die Aufbereitung eines Kühlmediums zur Kühlung von Komponenten einer Strömungsmaschine, wie bspw. Leitschaufeln einer Gasturbine Verwendung.

Eine ausreichende und zuverlässige Kühlung von Komponenten einer Strömungsmaschine stellt einen wesentlichen Aspekt für den Betrieb der Strömungsmaschine dar. Moderne Hochtemperaturgasturbinen erfordern zur Erzielung eines hohen Wirkungsgrades ein ausgeklügeltes Kühlsystem, insbesondere zur Kühlung der hoch belasteten Turbinenschaufeln. Die Turbinenschaufeln sind daher mit Kühlkanälen bzw. Kühlkanäle bildenden Hohlräumen durchsetzt, durch die während des Betriebes der Anlage ein Kühlmedium, insbesondere Kühlluft, strömt. Im Anströmbereich der Turbinenschaufeln an deren Vorderkante sind in der Regel zahlreiche Kühlluftbohrungen vorgesehen, durch die das Kühlmedium vom Inneren der Schaufeln nach außen treten kann. Auf der Oberfläche bildet sich in diesem Bereich ein Kühlluftfilm, der die Turbinenschaufeln vor einer zu starken Erwärmung schützt. In gleicher Weise sind auch entsprechende Kühlluftbohrungen an der Hinterkante der Turbinenschaufeln vorhanden.

Das Kühlmedium wird in vielen Fällen durch einen Teil der von der Kompressorstufe komprimierten oder an dieser vorbeigeleiteten Luft gebildet und den Kühlkanälen über ein oder mehrere Zufuhrkanäle zugeführt.

Ein Problem beim Betrieb eines derartigen Kühlsystems einer Strömungsmaschine stellt die Verstopfung der Kühlkanäle oder Kühlluftbohrungen durch Schmutz- oder Staubpartikel dar, die aus der Atmosphäre oder von stromauf der Kühlkanäle gelegenen Komponenten der Strömungsmaschine stammen können und mit dem Kühlmedium in die Kühlkanäle eingebracht werden. Eine Verstopfung einzelner Kühlkanäle oder Kühlluftbohrungen kann zu einer erheblichen lokalen Temperaturbelastung der zu kühlenden Komponente bis zu deren Beschädigung führen.

### Stand der Technik

Die an sich naheliegende Verwendung von Rückhaltefiltern zur Reinigung der Kühlluft verursacht sehr grosse Druckverluste, und kommt daher nicht in Frage.

Zur Vermeidung oder Verminderung der Verstopfungsgefahr ist es daher bekannt, Separatoren wie bspw. Zyklone innerhalb des Kühlkreislaufs anzuordnen, die Schmutz- oder Staubpartikel vom Kühlmedium trennen. In diesen Separatoren werden Wirbel im Kühlmedium erzeugt, durch die die Staub- und Schmutzpartikel aufgrund ihrer Trägheit vom Kühlmedium abgetrennt und über eine gesonderte Staubaustragsöffnung abtransportiert werden.

Der Einsatz eines derartigen Separators in Form eines Axialzyklons ist in der DE 198 34 376 A1 beschrieben. Die von der Kompressorstufe kommende Kühlluft wird hierbei vor dem Eintritt in die erste Leitschaufel der Turbinenstufe durch den Axialzyklon geleitet. In dem Zyklon ist ein Drallerzeuger ausgebildet, der einen Wirbel in der Kühlluft erzeugt, aufgrund dessen die trägeren Staub- und Schmutzpartikel auf die Wandung des Zyklons auftreffen und dort abfallen. Am Boden des Zyklons werden sie über entsprechende Austragkanäle abgezogen. Ein Nachteil eines derartigen Separators besteht jedoch darin, dass er erheblichen zusätzlichen Bauraum beansprucht, der in Strömungsmaschinen nicht in jedem Falle zur Verfügung steht. Separatoren werden daher häufig nur für Anwendungen eingesetzt, bei denen die Kühlluft aus dem inneren Bereich der Strömungsmaschine herausgeführt, außerhalb des inneren Bereiches in dem Separator gereinigt und anschließend zur Kühlung der entsprechenden Komponenten wieder in den inneren Bereich zurückgeführt werden kann.

Bekannt sind weiterhin Staub- und Schmutzabscheider, bei denen das strömende Medium, hier also insbesondere die Kühlluft, tangential zu einem kreisbahn- oder bevorzugt spiralförmigen Strömungs-Führungskanal eintritt, dort auf einer gekrümmten Bahn in ein inneres Abströmsegment geleitet wird, wo die Strömungsrichtung umgelenkt wird, derart, dass die Abströmung axial, im wesentlichen normal zur Zuströmung und zu der Krümmungsebene der Kreis- oder Spiralbahn, erfolgt. Durch die gekrümmte Strömung des Mediums in dem Führungskanal werden dabei Staub- und Schmutzpartikel in Richtung einer radial äusseren Wand des Führungskanals zentrifugiert. Es sind daher Staubaustragsöffnungen an der radial äusseren Wand des Strömungskanals angeordnet, über welche ein Teilstrom des Mediums die Staub- und Schmutzpartikel ableitet, derart, dass der in das zentrale Abströmsegment eintretende Reststrom im Wesentlichen frei von partikel- oder tropfenförmigen Verunreinigungen ist. Durch die Anordnung des gekrümmten Führungskanals um ein zentrales Abströmsegment bauen diese Abscheider sehr kompakt. Da das Medium keine Rückhaltefilter durchströmt, sind auch die Totaldruckverluste gering. Nach diesem Prinzip aufgebaute Abscheider sind beispielsweise aus GB 2 164 391 und US 3,907,671 bekanntgeworden. Allerdings verbrauchen diese Abscheider einen Teilstrom des zugeführten Mediums zur Ableitung des Staubfracht. Gerade im Kühlsystem einer Gasturbine handelt es sich dabei aber um verdichtete Luft, welche dem Prozess entzogen wurde. Ein Verwerfen dieses aufwändig teilaufbereiteten Teilmassenstroms ist unwirtschaftlich und in hohem Masse unerwünscht.

### Darstellung der Erfindung

Der in den Ansprüchen gekennzeichneten Erfindung liegt die Aufgabe zugrunde, bei einer Vorrichtung gemäss dem Oberbegriff des Anspruchs 1 die Nachteile des Standes der Technik zu vermeiden. Insbesondere ist eine Abscheidevorrichtung anzugeben, welche geringen Bauraum beansprucht, geringe Druckverluste verursacht, und keinen Verlustmassenstrom zum Abtransport der Schmutzfracht benötigt.

Die Aufgabe wird mit der Vorrichtung gemäß Patentanspruch 1 gelöst. Vorteilhafte Ausgestaltungen der Vorrichtung sind nachfolgend angegeben Gegenstand der Unteransprüche.

Kern der Erfindung ist es also, den Teilstrom, der für den Austrag der Staub- und Schmutzfracht über die Staubaustragsöffnung benötigt wird, in einen Nebenstrom-Strömungsweg zu leiten, welcher bevorzugt eine Staubkammer aufweist, wobei der Nebenstrom-Strömungsweg über eine Rückführöffnung mit dem Führungskanal in Verbindung steht, wobei im Strömungsweg zwischen der Staubaustragsöffnung und der Rückführöffnung ein Rückhaltefilter angeordnet ist. Auf diese Weise wird der zur Ableitung der Staubfracht benötigte Teilstrom nach einer Reinigung im Rückhaltefilter wieder dem nutzbaren Medienstrom zugeführt, und der Verlust eines Teilstromes wird also vermieden. Der Rückhaltefilter wird nur von einem Teilstrom des gesamten Mediums durchströmt, wodurch die hierdurch verursachten Totaldruckverluste insbesondere bei limitierter Baugrösse des Rückhaltefilters wesentlich kleiner sind als bei einer Durchströmung mit dem gesamten Medienstrom. Die Druckverluste können leicht kompensiert werden, indem die Rückführöffnung an einer geeigneten Stelle niedrigen statischen Druckes in den Führungskanal mündet. So kann der Führungskanal beispielsweise in einem Abschnitt mit einer venturiförmigen konvergent-divergenten Kontur versehen sein, wobei die Rückführöffnung im Bereich der Düsenkehle, also des engsten Querschnitts, des der so gebildeten Venturidüse mündet. Ebenso findet sich auch in dem zentralen Abströmsegment, insbesondere in dessen Zentrum, ein niedriger statischer Druck, dergestalt, dass es von Vorteil ist, die Rückführöffnung in diesem Bereich münden zu lassen, oder ein Verlängerungselement anzuordnen, welches in der Mitte des zentralen Abströmsegmentes mündet. Eine besonders kompakte Bauweise der Vorrichtung wird realisiert, wenn der Führungskanal wenigstens abschnittsweise kreissegmentförmig oder bevorzugt spiralförmig um ein zentrales Abströmsegment angeordnet ist. Dieses Abströmsegment ist dabei Bestandteil des Führungskanals. Dabei sind die Zuströmöffnung und die Abströmöffnung, welche die Zuströmrichtung und die Abströmrichtung vorgeben, mit Vorteil so angeordnet, dass die Zuströmrichtung und die Abströmrichtung im Wesentlichen normal zueinander orientiert sind. In einer bevorzugten Ausführungsform ist die Zuströmrichtung tangential und die Abströmrichtung axial zu einem gedachten Zylinder orientiert.

In einer Ausgestaltung der Erfindung weist der Nebenstrom-Strömungsweg eine Staubkammer auf, in welcher sich ganz besonders günstig der Rückhaltefilter anordnen lässt. Die Staubkammer wird bevorzugt unmittelbar an die Staubaustragsöffnung angrenzend angeordnet. Sie bewirkt dort eine Verzögerung und Vergleichmässigung der Strömung vor der Zuströmung zum Rückhaltefilter.

Beim Betrieb dieser Vorrichtung strömt das Medium mit den darin enthaltenen Staub- und Schmutzpartikeln über die Zuströmöffnung in den Führungskanal. Innerhalb der Krümmung des Führungskanals wirken.Fliehkräfte auf die Staub- und Schmutzpartikel, so dass diese sich in der Strömung im Bereich der äußeren Wandung der Krümmung konzentrieren. In diesem Bereich befindet sich die Staubaustrittsöffnung, durch die der größte Teil der in der Strömung enthaltenen Staub- und Schmutzpartikel aufgrund der Fliehkraft ausgetragen wird. Der Hauptanteil der Strömung des Kühlmediums, der nach Durchlaufen der Krümmung einen deutlich geringeren Anteil an Staub- und Schmutzpartikeln - in erster Linie kleinere und leichtere Partikel - aufweist, wird durch den Führungskanal zu einer Abströmöffnung gelenkt. Über die Abströmöffnung wird die gesäuberte Kühlluft den zu kühlenden Komponenten zugeführt. Der für den Staubaustrag erforderliche Anteil des Kühlmediums wird gefiltert und gereinigt ebenfalls wieder dem Führungskanal zugeführt.

Die vorliegende Vorrichtung eignet sich insbesondere zur Abtrennung von größeren Staub- oder Schmutzpartikeln in der Größenordnung von ca. 100 µm bis 5 mm aus einer Strömung, insbesondere einer Kühlluftströmung für Gasturbinen. Aufgrund des einfachen Aufbaus der vorliegenden Vorrichtung, die lediglich einen entsprechenden gekrümmten Führungskanal umfassen muss, lässt sich diese auch bei Anlagen einsetzen, in denen wenig Bauraum zur Verfügung steht. Weiterhin wird in dieser Vorrichtung kein starker Drall ausgebildet, und es wird nur ein Teilstrom des Mediums über Rückhaltefilter geführt, so, dass der Druckverlust über die Vorrichtung nur gering ist. Weiterhin kann durch eine entsprechende Anordnung der Strömungsrückführung der durch den Rückhaltefilter verursachte Totaldruckverlust kompensiert werden, indem diese an einer Stelle verminderten statischen Druckes in den Führungskanal mündet.

Die Wirkungsweise der erfindungsgemässen Vorrichtung lässt sich vereinfacht so umschreiben, dass durch die Zentrifugalwirkung in dem gekrümmten Führungskanal eine Anreicherung von Staubpartikeln in einem radial äusseren Bereich des gekrümmten Kanals stattfindet. Anstatt den gesamtem Medienstrom durch Rückhaltefilter zu leiten, wird nur ein staub- und schmutzangereicherter Teilstrom durch Rückhaltefilter geleitet. Durch den deutlich reduzierten Massenstrom, welcher den Filter durchströmen muss, kann dessen Baugrösse reduziert werden, bei gleichzeitig geringerem Totaldruckverlust. Bevorzugt mündet der gefilterte Teilstrom in einem Bereich abgesenkten statischen Druckes im Führungskanal, so, dass die Strömung durch den Rückhaltefilter nach der Art einer Strahlpumpe unterstützt wird, wodurch der Totaldruckverlust kompensiert wird. Der Effekt wird weiterhin auch dadurch unterstützt, dass an der radial äusseren Wand des Führungskanals, also an der Stelle, wo der partikelbeladene Teilstrom entnommen wird, ohnehin ein höherer Druck herrscht.

In einer bevorzugten Ausführungsform der Erfindung verläuft, die Krümmung des Führungskanals im Wesentlichen in einer Ebene. In diesem Fall ist die Abströmsöffnung vorzugsweise derart ausgebildet, dass sie die Abströmung der gereinigten Kühlluft im Wesentlichen normal, also senkrecht, zu dieser Ebene ermöglicht.

Weitere bevorzugte Ausführungsformen der Erfindung betreffen die Ausgestaltung des im Nebenstrom-Strömungsweg, insbesondere in der Staubkammer, angeordneten Rückhaltefilters. Der Rückhaltefilter besteht mit Vorteil aus einer Abfolge von Strömungsrestriktionen und Expansionskammern. Derartige Konfigurationen weisen beispielsweise offenporige Schäume, insbesondere sind hier Metallschäume geeignet, auf. Auch übereinandergefügte geprägte Lamellen mit auf der Oberfläche abwechselnd angeordneten Erhebungen und Vertiefungen können hierfür eingesetzt werden. Im Gegensatz zu Filtermatten setzen bei derartigen porösen Filtern abgelagerte Schmutzpartikel nicht die Strömungsquerschnitte zu. Die Wirkungsweise ist vielmehr die, dass die staubbeladene Strömung eine Strömungsrestriktion, deren freier Durchströmquerschnitt grösser bemessen ist als die Partikel, durchströmt, und danach in eine Expansionskammer gelangt. In der Expansionskammer kommt es zur Ausbildung von Wirbelströmungen. Staubpartikel werden in diesen Wirbelströmungen eingeschlossen. Wenn sie einmal in Totwassergebieten der Expansionskammern abgelagert worden sind, wird es für die Partikel nahezu unmöglich, wieder in die Strömung zurückzugelangen. Durch eine Aufeinanderfolge einer Vielzahl solcher Strömungsrestriktionen und Expansionskammern werden Staub- und Schmutzpartikel nahezu vollständig aus der Strömung abgeschieden. Die einzelnen Expansionskammern haben ein im Vergleich zu den Partikeln sehr grosses Volumen auf, weshalb deren Rückhaltekapazität sehr hoch ist, wodurch ein an sich wartungsfreier Betrieb über längere Zeiträume, beispielsweise zwischen zwei C-Inspektionen einer Gasturbine, möglich ist, ohne dass die hervorgerufenen Druckverluste ansteigen. In einer anderen Ausführungsform der Erfindung sind in dem Nebenstrom-Strömungsweg wenigstens zwei Filter strömungsmässig parallel angeordnet, wobei diese mit einem in dem Nebenstrom-Strömungsweg angeordneten Umschaltorgan oder mittels zweier einzeln bedienbarer Absperrorgane wahlweise durchströmbar sind. Es ist damit also möglich, jeweils einen Filter zu durchströmen, und einen Filter von der Strömung zu isolieren, dergestalt, dass im Betrieb der Vorrichtung ein Filterelement bei Bedarf austauschbar ist.

### Kurze Beschreibung der Zeichnungen

Die vorliegende Vorrichtung zur Staub- und Schmutzabscheidung in strömenden Medien, im Folgenden auch Staubabscheider genannt, wird nachfolgend anhand von Ausführungsbeispielen in Verbindung mit den Zeichnungen nochmals kurz erläutert. Im einzelnen zeigen
Figur 1 ein erstes Ausführungsbeispiel der Erfindung;
Fig. 2eine Skizze des dreidimensionalen Haupströmungsmusters in einer Vorrichtung gemäss Figur 1;
Figuren 3 und 4 weitere Ausführungsformen einer Vorrichtung;
Figur 5 ein Beispiel für die Verwendung der erfindungsgemässen Vorrichtung im Kühlsystem einer Gasturbine;
Figur 6 einen vergrösserten Aussschnitt eines erfindungsgemäss bevorzugten Rückhaltefilters;
Figur 7 eine schematisierte Darstellung einer weiteren Ausführungsform der Erfindung.

### Wege zur Ausführung der Erfindung

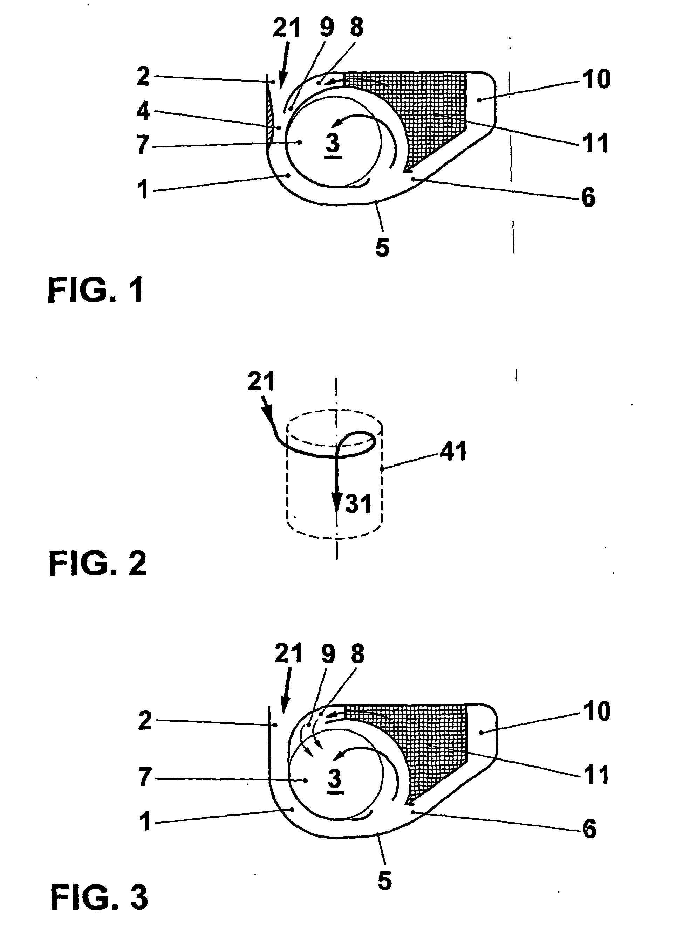

Figur 1 zeigt ein erstes Ausführungsbeispiel für eine Realisierung der vorliegenden Vorrichtung im Querschnitt. Die massgebenden Medienströme sind durch Pfeile dargestellt. In der Figur ist der Führungskanal 1 zu erkennen, der zwischen einer Zuströmöffnung 2 für das Kühlmedium und einer Abströmöffnung 3 eine Krümmung aufweist. Die Auslassöffnung 3 selbst ist in einem zentralen Abströmsegment 7 angeordnet. Die Anordnung der Zuströmöffung und der Abströmöffung geben dabei die Zuström- und Abströmrichtung vor. In Figur 2 ist die Stroömungskonfiguration dreidimensional dargestellt. Bei dem dargestellten Ausführungsbeispiels, das eine besonders platzsparende Bauform darstellt, bei dem der Führungskanal 1 spiralförmig um ein zentrales Abströmsegment 3 angeordnet ist, ist die Abströmung 31 im Wesentlichen normal zur Zuströmung 21 orientiert. Die Zuströmung 21 erfolgt im wesentlichen tangential und die Abströmung axial zu einem gedachten Zylinder 41. Wieder mit Bezug auf Figur 1 ist erkennbar, dass der Führungskanal 1 im Bereich der Kanalkrümmung von einer radial äusseren Wand 5 begrenzt ist. Dort ist, radial aussen im Bereich der Krümmung, eine Staubaustragsöffnung 6 angeordnet, die in einen Nebenstrom-Strömungsweg 8 mündet. Der Nebenstrom-Strömungsweg steht wiederum über eine Rückführöffnung 9 mit dem Führungskanal in Verbindung. Der Führungskanal 4 weist im dargestellten Beispiel eine konvergentdivergente Venturidüse 4 auf. Die Rückströmöffnung 9 ist im Bereich der Düsenkehle angeordnet, also an der Stelle der höchsten Strömungsgeschwindigkeit und damit eines niedrigen statischen Druckes. Diese Kontur wirkt damit analog zu einer Strahlpumpe auf die Strömung im Nebenstromkanal 8. Da die Staubaustragsöffnung 6 an einer radial äusseren Stelle eines gekrümmten Strömungskanals angeordnet ist, herrscht dort ein hoher statischer Druck, wodurch das treibende Druckgefälle über den Nebenstromkanal 8 maximiert wird. Der Nebenstrom-Strömungsweg weist weiterhin eine Staubkammer 10 auf, in der ein Rückhaltefilter 11 angeordnet ist. Die Staubkammer 10 unterstützt dabei eine gleichmässige Anströmung des Rückhaltefilters. Der Rückhaltefilter ist bevorzugt als poröser Volumenfilter ausgeführt, was unten noch näher erläutert wird. In der Krümmung des Führungskanals 1 werden Staubpartikel auszentrifugiert und über die Staubaustragsöffnung 6 in den Nebenstrom-Strömungsweg geführt. Dort gelangt ein mit Staub und gegebenenfalls Tropfen angereicherter Teilstrom des Mediums durch die Staubkammer 10 in den Filter 11, wo Verunreinigungen abgelagert werden. Gereinigtes gasförmiges Medium gelangt über die Rückführöffung 9 wieder in den Führungskanal 1. Bei der Reinigung von Kühlluft in einer erfindungsgemässen Vorrichtung geht also keine Kühlluft zum Austrag von Verunreinigungen verloren. Allerdings wird der im Rückhaltefilter 11 gereinigte Teilstrom wieder mit verunreinigtem zuströmenden Medium vermischt, und der von der Vorrichtung aufzubereitende Medienstrom wird somit vergrössert.

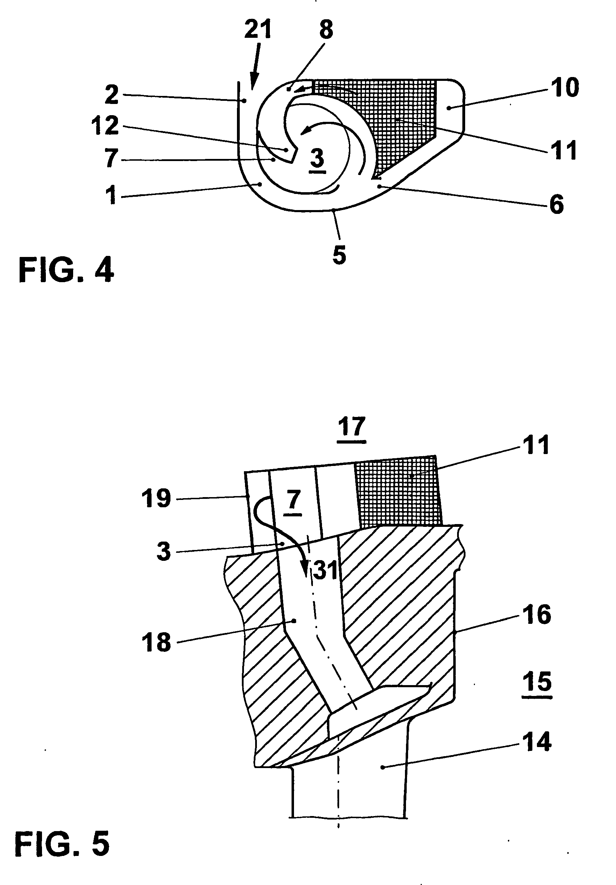

Dieser Nachteil wird bei der Ausführung gemäss den Figuren 3 und 4 vermieden. Bei der Ausführungsform gemäss Figur 3 mündet die Rückführöffung 9 unmittelbar in dem zentralen Abströmsegment 7. Der im Rückhaltefilter 11 gereinigte Teilstrom wird somit unmittelbar dem mittels der Fliehkraftabscheidung gereinigten Medium zugeführt. Gemäss Figur 4 weist die Rückströmöffung ein Verlängerungselement 12 auf, welches zentral in dem Abströmsegment 7 mündet, wo ein sehr tiefer statischer Druck vorliegt. Dies erhöht wiederum das treibende Druckgefälle über den Rückhaltefilter 11. Im Vergleich mit der in Figur 1 dargestellten Ausführungsform wird vorliegend zwar die Vermischung von gereinigtem und ungereinigtem Medium vermieden; sollten jedoch Verunreinigungen den Rückhaltefilter 11 durchbrechen, gelangen diese unmittelbar mit dem vorgängig gereinigtem Medium durch die Abströmöffnung 3 in Schmutzsensible Bereiche. Dieses wiederum wird bei der Ausführungsform gemäss Figur 1 verhindert, da dort das aus dem Rückhaltefilter 11 abströmende Medium vor dem Austritt aus der Vorrichtung erst noch einmal die Zentrifugalseparation durchlaufen muss.

In Figur 5 ist schematisch der Einsatz einer derartigen Vorrichtung zur Aufbereitung von Kühlluft in einer Gasturbinenanlage dargestellt. Die Figur 5 zeigt einen Ausschnitt aus einer derartigen Anlage mit einer Leitschaufel 14 des ersten leitschaufelkranzes sowie einer Brennkammer 15 mit Brennkammerwand 16. Kühlluft wird in einem Kühlluftplenum 17 bereitgestellt. Ein Teil der Kühlluft soll über einen Kühlluftkanal 18 und einen Verteiler den Schaufeln des ersten Leitschaufelkranzes zugeführt werden. Die Schaufeln weisen dabei sehr dünne und daher staubempfindliche Filmkühlbohrungen auf, weshalb an die zugeführte Kühlluft hohe Reinheitsanforderungen gestellt werden. Dieser Teil der Kühlluft wird daher durch einen erfindungsgemässen Staubabscheider 19 geleitet, dessen Abströmöffnung 3 mit dem Kühlluftkanal 18 in Verbindung steht, und der vom Kühlluftplenum 17 aus angeströmt wird. In den Kühlluftkanal tritt damit von dem Staubabscheider 19 aufbereitete Kühlluft 31 ein.

Alle dargestellten Ausführungsformen haben den Vorteil gegenüber einer konventionellen Anordnung eines Filters in einem Zuführkanal für das Kühlmedium, dass der Druckabfall zwischen dem Einlass der Kühlluft und den Auslasskanälen nicht signifikant anwächst, wenn der Filter durch die Staubpartikel verstopft wird.

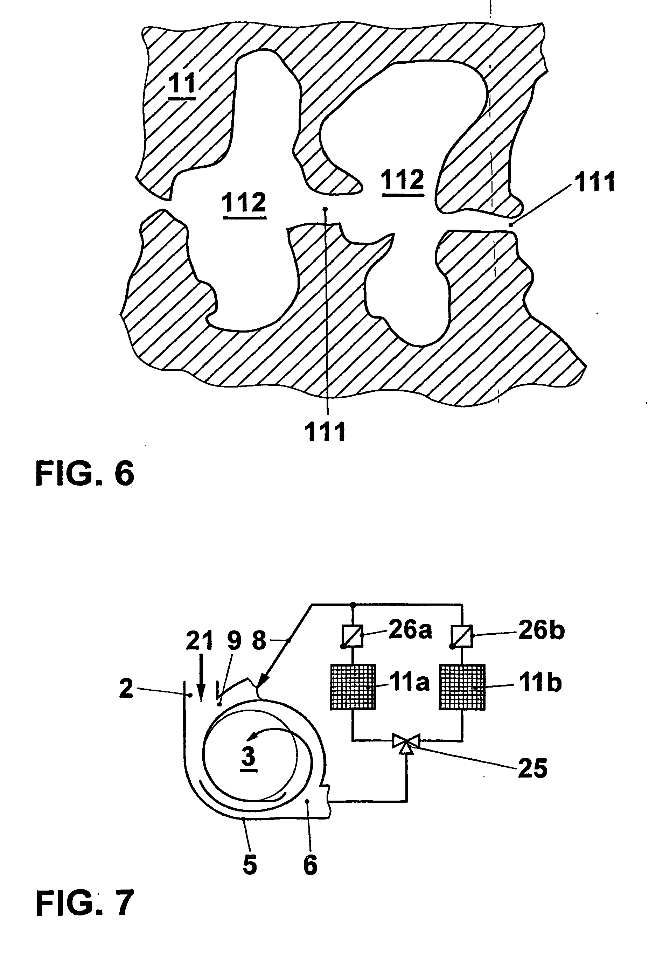

In Figur 6 ist ein Beispiels für einen Rückhaltefilter 11 aus einem offenporigen Schaum dargestellt, der Filter bildet eine Abfolge von Strömungsrestriktionen 111, also eigentlichen Verengungen der Strömungsquerschnitte, und Expansionskammern 112. Die Strömungsquerschnitte der Restriktionen 111 sind gross genug, um die Verunreinigungen passieren zu lassen, so, dass es nicht zu einem eigentlichen Verstopfen des Filters mit einem Ansteigen des Druckverlustes kommt. Vielmehr bilden sich in den Expansionskammern 112 grossräumige Verwirbelungen. Partikel lagern sich in dort ausgebildeten Totwassergebieten ab und werden und den Expansionskammern festgehalten. Die Speicherkapazität eines derartigen offenen Schaumes ist sehr gross, weshalb sie üblicherweise einen praktisch wartungsfreien Einsatz über sehr lange Zeit ermöglichen. Die Herstellung solcher offenporiger Schäume, beispielsweise aus Kunststoff, Keramik, oder Metall, ist dem Fachmann an sich geläufig, und muss an dieser stelle nicht weiter diskutiert werden. Ebenso lässt sich einsolcher Rückhaltefilter auch dadurch herstellen, dass plattenförmige Elemente mit einer beispielsweise geprägten Oberfläche, welche Erhebungen und/oder Vertiefungen aufweist, übereinander laminiert werden.

Im Falle, dass eine häufigere Wartung des Rückhaltefilters notwendig wäre, kann die in Figur 7 schematisch dargestellte Ausführungsform zum Einsatz kommen. Dabei weist der Nebenstrom-Strömungsweg zwei strömungsmässig parallel angeordnete Filterelemente 11a und 11b auf. Ein 3/2-Wege-Ventil ermöglicht es, jeweils einen der Filter mit der staubbeladenen Nebenstrom-Strömung von der Staubaustragsöffnung 6 zu beaufschlagen. Die stromab der Filterelemente angeordneten Rückschlagorgane 26a und 26b gewährleisten dabei die vollständige Isolierung des jeweils nicht beaufschlagten Filterelementes. Damit kann, sofern mechanisch von aussen zugänglich, eines der Filterelemente 11a und 11b ohne gesamthafte Betriebsunterbrechung gewartet werden, während die Abscheidevorrichtung betrieben und das jeweils andere Filterelement durchströmt wird.

Es versteht sich von selbst, dass die erfindungsgemässe Vorrichtung auch in anderer Ausgestaltung und anderer Anordnung in einer Strömungsmaschine angebracht werden kann.

### Bezugszeichenliste

- 1: Führungskanal
- 2: Zuströmöffnung
- 3: Abströmöffnung
- 4: Venturi-Düse
- 5: äußere Wandung der Krümmung
- 6: Staubaustrittsöffnung
- 7: zentrale Kammer, Abströmsegment
- 8: Nebenstromkanal
- 9: Rückführöffnung
- 10: Staubkammer
- 11, 11a, 11b: Rückhaltefilter
- 12: Verlängerungselement
- 14: Leitschaufel
- 15: Brennkammer
- 16: Brennkammerwand
- 17: Kühlluftplenum
- 18: Kühlluftkanal
- 19: Staubabscheider
- 21: Zuströmung zum Staubabscheider
- 25: Umschaltorgan, 3/2-Wege-Ventil
- 26a, 26b: Rückschlagorgan
- 31: Abströmung aus dem Staubabscheider
- 41: gedachter Zylinder
- 111: Strömungsrestriktion
- 112: Expansionskammer

## Patentansprüche

1. Vorrichtung zur Staub- und Schmutzabscheidung in einem strömenden Medium, umfassend eine Zuströmöffnung (2), eine Abströmöffnung (3), sowie einen Führungskanal (1) für das strömende Medium, welcher Führungskanal sich von der Zuströmöffnung zur Abströmöffnung erstreckt, wobei der Führungskanal eine Krümmung aufweist, welche von einer radial äusseren Wand (5) begrenzt wird, und welche Vorrichtung weiterhin wenigstens eine Staubaustragssöffnung (6) aufweist, welche in der radial äusseren Wand im gekrümmten Abschnitt des Führungskanals angeordnet ist, **dadurch gekennzeichnet, dass** die Staubaustragsöffnung in einem Nebenstrom-Strömungsweg mündet, welche über eine Rückführöffnung (9) mit dem Führungskanal (1) in Verbindung steht, wobei in dem Nebenstrom-Strömungsweg zwischen der Staubaustragsöffnung und der Rückführöffnung ein Rückhaltefilter (11) angeordnet ist, und dass der Führungskanal (1) einen konvergent-divergenten Kanalabschnitt (4) aufweist, und die Rückführöffnung (9) im Bereich der dort ausgebildeten Düsenkehle in den Führungskanal mündet.

2. Vorrichtung nach Anspruch 1, **dadurch gekennzeichnet, dass** der Nebenstrom-Strömungsweg eine Staubkammer (10) beinhaltet.

3. Vorrichtung nach Anspruch 2, **dadurch gekennzeichnet, dass** der Rückhaltefilter (11) in der Staubkammer (10) angeordnet ist.

4. Vorrichtung nach einem der vorstehenden Ansprüche, **dadurch gekennzeichnet, dass** der Führungskanal (1) wenigstens abschnittsweise kreis- und/oder spiralförmig um ein zentrales Abströmsegment (7) angeordnet ist.

5. Vorrichtung nach Anspruch 4, **dadurch gekennzeichnet, dass** die Rückführöffnung (9) in das zentrale Abströmsegment (7) mündet.

6. Vorrichtung nach Anspruch 1, **dadurch gekennzeichnet, dass** an der Rückführöffnung ein Verlängerungselement (12) angeordnet ist, welches in der Mitte des zentralen Abströmsegmentes mündet.

7. Vorrichtung nach einem der vorstehenden Ansprüche, **dadurch gekennzeichnet, dass** der Rückhaltefilter (11) aus einer Abfolge von Strömungsrestriktionen (111) und Expansionskammern (112) besteht.

8. Vorrichtung nach einem der vorstehenden Ansprüche, **dadurch gekennzeichnet, dass** der Rückhaltefilter aus einem offenporigen Schaum besteht.

9. Vorrichtung nach einem der vorstehenden Ansprüche, **dadurch gekennzeichnet, dass** der Rückhaltefilter aus einem porösen Metallschaum besteht.

10. Vorrichtung nach einem der vorstehenden Ansprüche, **dadurch gekennzeichnet, dass** in dem Nebenstrom-Strömungsweg wenigstens zwei strömungsmässig parallel angeordnete Rückhaltefilter (11a, 11b) angeordnet sind, welche wahlweise durchströmbar sind.

11. Vorrichtung nach einem der vorstehenden Ansprüche, wobei durch die Anordnung der Zuströmöffnung (2) und der Abströmöffnung (3) eine Zuströmrichtung (21)und eine Abströmrichtung (31) vorgegeben ist, **dadurch gekennzeichnet, dass** die Abströmrichtung im wesentlichen normal zu der Zuströmrichtung orientiert ist.

12. Vorrichtung nach einem der vorstehenden Ansprüche, wobei durch die Anordnung der Zuströmöffnung (2) und der Abströmöffnung (1) eine Zuströmrichtung (21) und eine Abströmrichtung (31) vorgegeben ist, **dadurch gekennzeichnet, dass** die Zuströmung im wesentlichen tangential und die Abströmung im wesentlichen axial zu einem gedachten Zylinder orientiert ist.

## Claims

1. Device for separating dust and dirt out of a flowing medium, comprising an inflow opening (2), an outflow opening (3) and a guide passage (1) for the flowing medium, which guide passage extends from the inflow opening to the outflow opening, the guide passage having a curvature which is delimited by a radially outer wall (5), and which device also has at least one dust discharge opening (6) which is arranged in the radially outer wall in the curved section of the guide passage, **characterized in that** the dust discharge opening opens out in a bypass flow path which is in communication with the guide passage (1) via a return opening (9), a retention filter (11) being arranged in the bypass flow path between the dust discharge opening and the return opening, and **in that** the guide passage (1) includes a convergent-divergent passage section (4), and the return opening (9) opens out into the guide passage in the region of the nozzle throat formed there.

2. Device according to Claim 1, **characterized in that** the bypass flow path includes a dust chamber (10).

3. Device according to Claim 2, **characterized in that** the retention filter (11) is arranged in the dust chamber (10).

4. Device according to one of the preceding claims, **characterized in that** the guide passage (1), at least in sections, is arranged in the shape of a circle and/or spiral around a central outflow segment (7).

5. Device according to claim 4, **characterized in that** the return opening (9) opens out into the central outflow segment (7).

6. Device according to Claim 1, **characterized in that** an extension element (12), which opens out in the center of the central outflow segment, is arranged at the return opening.

7. Device according to one of the preceding claims, **characterized in that** the retention filter (11) comprises a sequence of flow restrictions (111) and expansion chambers (112).

8. Device according to one of the preceding claims, **characterized in that** the retention filter comprises an open-cell foam.

9. Device according to one of the preceding claims, **characterized in that** the retention filter comprises a porous metal foam.

10. Device according to one of the preceding claims, **characterized in that** at least two retention filters (11a, 11b), which are arranged in parallel in terms of flow and through which medium can flow as alternatives, are arranged in the bypass flow path.

11. Device according to one of the preceding claims, in which an inflow direction (21) and an outflow direction (31) are predetermined by the arrangement of the inflow opening (2) and the outflow opening (3), **characterized in that** the outflow direction is oriented substantially normally with respect to the inflow direction.

12. Device according to one of the preceding claims, in which an inflow direction (21) and an outflow direction (31) are predetermined by the arrangement of the inflow opening (2) and the outflow opening (1), **characterized in that** the inflow is oriented substantially tangentially, and the outflow substantially axially, with respect to an imaginary cylinder.

## Revendications

1. Dispositif pour séparer la poussière et les impuretés dans un milieu en écoulement, comprenant une ouverture d'entrée de l'écoulement (2), une ouverture de sortie de l'écoulement (3) ainsi qu'un canal de guidage (1) pour le milieu en écoulement, ce canal de guidage s'étendant depuis l'ouverture d'entrée de l'écoulement jusqu'à l'ouverture de sortie de l'écoulement, le canal de guidage présentant une courbure qui est limitée par une paroi radialement extérieure (5), et ce dispositif présentant en outre au moins une ouverture d'évacuation de la poussière (6) qui est disposée dans la paroi radialement extérieure dans la portion courbe du canal de guidage, **caractérisé en ce que** l'ouverture d'évacuation de la poussière débouche dans une voie d'écoulement de courant auxiliaire qui est en liaison avec le canal de guidage (1) par le biais d'une ouverture de retour (9), un filtre de retenue (11) étant disposé dans la voie d'écoulement de courant auxiliaire entre l'ouverture d'évacuation de la poussière et l'ouverture de retour, et **en ce que** le canal de guidage (1) présente une portion de canal convergente-divergente (4), et l'ouverture de retour (9) débouche dans le canal de guidage dans la région de la cannelure de buse qui y est formée.

2. Dispositif selon la revendication 1, **caractérisé en ce que** la voie d'écoulement de courant auxiliaire contient une chambre à poussière (10).

3. Dispositif selon la revendication 2, **caractérisé en ce que** le filtre de retenue (11) est disposé dans la chambre à poussière (10).

4. Dispositif selon l'une quelconque des revendications précédentes, **caractérisé en ce que** le canal de guidage (1) est disposé au moins en partie sous forme circulaire et/ou de spirale autour d'un segment central de sortie de l'écoulement (7).

5. Dispositif selon la revendication 4, **caractérisé en ce que** l'ouverture de retour (9) débouche dans le segment central de sortie de l'écoulement (7).

6. Dispositif selon la revendication 1, **caractérisé en ce qu'**un élément de prolongation (12) est disposé au niveau de l'ouverture de retour, et débouche au milieu du segment central de sortie de l'écoulement.

7. Dispositif selon l'une quelconque des revendications précédentes, **caractérisé en ce que** le filtre de retenue (11) se compose d'une succession de restrictions d'écoulement (111) et de chambres d'expansion (112).

8. Dispositif selon l'une quelconque des revendications précédentes, **caractérisé en ce que** le filtre de retenue se compose d'une mousse à pores ouverts.

9. Dispositif selon l'une quelconque des revendications précédentes, **caractérisé en ce que** le filtre de retenue se compose d'une mousse métallique poreuse.

10. Dispositif selon l'une quelconque des revendications précédentes, **caractérisé en ce qu'**au moins deux filtres de retenue (11a, 11b) disposés en parallèle en termes d'écoulement, sont disposé dans la voie d'écoulement de courant auxiliaire, et peuvent être traversés de manière sélective par l'écoulement.

11. Dispositif selon l'une quelconque des revendications précédentes, dans lequel, grâce à l'agencement de l'ouverture d'entrée de l'écoulement (2) et de l'ouverture de sortie de l'écoulement (3), on obtient un sens d'entrée (21) et un sens de sortie (31), **caractérisé en ce que** le sens de sortie est orienté de manière essentiellement perpendiculaire au sens d'entrée.

12. Dispositif selon l'une quelconque des revendications précédentes, dans lequel, grâce à l'agencement de l'ouverture d'entrée de l'écoulement (2) et de l'ouverture de sortie de l'écoulement (3), on obtient un sens d'entrée (21) et un sens de sortie (31), **caractérisé en ce que** l'écoulement d'entrée est orienté sensiblement tangentiellement, et l'écoulement de sortie est orienté sensiblement axialement par rapport à un cylindre imaginaire.
